# FASCICULE DE BREVET EUROPEEN

(11) **EP 2 686 529 B1**
(45) Date de publication et mention de la délivrance du brevet: **26.02.2020**
(21) Numéro de dépôt: 12712325.5
(22) Date de dépôt: 06.03.2012
(51) Int. Cl.: F01N 3/10, F01N 13/02, F01N 3/20, F01N 3/035, F01N 3/28, F01N 13/00, F01N 3/021

(54) **ENSEMBLE COUDÉ DE POST-TRAITEMENT DES GAZ D'ECHAPPEMENT D'UN MOTEUR A COMBUSTION, GROUPE MOTOPROPULSEUR ET VEHICULE ASSOCIÉS**
KOMPAKTE GEKRÜMMTE EINHEIT ZUR NACHBEHANDLUNG VON ABGASEN, ANTRIEBSSTRANG UND ZUGEHÖRIGES FAHRZEUG
COMPACT ELBOW UNIT FOR EXHAUST GAS POST-TREATMENT, POWER TRAIN AND ASSOCIATED VEHICLE

(30) Priorité: 16.03.2011 FR 1152142; 12.04.2011 FR 1153159
(43) Date de publication de la demande: 22.01.2014
(73) Titulaire: PSA Automobiles SA, 78300 Poissy (FR)
(72) Inventeur: TRAIZET, Gregoire, F-91120 Palaiseau (FR); FERRAND, Nicolas, 78500 Sartrouville (FR); LERE, Sylvain, F-75018 Paris (FR); CEREIJO, Manuel, F-75020 Paris (FR)
(74) Mandataire: Bourguignon, Eric Pascal Jean
(86) Numéro de dépôt international: PCT/FR2012/050454
(87) Numéro de publication internationale: WO 2012/123660

(56) Documents cités:
- EP-A1- 2 177 264
- EP-A1- 2 676 016
- EP-A2- 1 728 984
- WO-A1-2010/142647
- WO-A2-2011/087549
- FR-A1- 2 222 538
- FR-A1- 2 947 004
- GB-A- 2 434 557
- NL-C- 2 002 986
- US-A1- 2006 130 458
- US-A1- 2007 012 032
- US-A1- 2010 083 643

## Description

La présente invention revendique les priorités des demandes françaises 1152142 déposée le 16 mars 2011 et 1153159 déposés le 12 avril 2011.

L'invention porte sur le domaine des moyens de traitement des polluants des gaz d'échappement des moteurs à combustion.

Les émissions polluantes des moteurs à combustion équipant les véhicules automobiles sont réglementées par des normes de plus en plus sévères. Les polluants réglementés sont - selon la technologie de moteur à combustion considérée - le monoxyde de carbone (CO), les hydrocarbures imbrûlés (HC), les oxydes d'azotes (NOx), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs diesel. Pour le traitement des oxydes d'azote (NOx), on connaît des technologies de réduction catalytique sélective, ou « SCR » pour « selective catalytic reduction », qui consistent à réduire les NOx par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les technologies de réduction catalytique sélective présentent l'avantage de permettre un très haut niveau de conversion des oxydes d'azotes.

D'une manière générale, la catalyse SCR nécessite d'ajouter un substrat catalytique dans la ligne d'échappement, ainsi qu'un moyen d'introduction du réducteur dans les gaz d'échappement, qui peut par exemple être un injecteur de réducteur.

Classiquement, le catalyseur SCR est placé sous la caisse du véhicule, loin du moteur car le réducteur injecté a besoin d'un long parcours dans la ligne d'échappement pour se décomposer d'une part, et de volumes libres suffisants pour s'implanter d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (adblue) ou préchauffage du système de mise à disposition de réducteur (gaz)), souffre de cet éloignement de la sortie du collecteur d'échappement.

Il est connu de la demande de brevet français déposée au nom de la demanderesse sous le numéro FR 10 50453 (non publiée à ce jour) un système compact de traitement des gaz d'échappement regroupant dans une enveloppe unique et dans cet ordre :
- Un catalyseur d'oxydation ;
- Une embouchure d'un moyen d'introduction de réducteur ou de précurseur d'un réducteur pour la réduction catalytique sélective des oxydes d'azote ;
- Un mélangeur pour le mélange des gaz d'échappement et du réducteur et/ou la conversion du précurseur en réducteur ;
- Un catalyseur de réduction catalytique sélective des oxydes d'azote ;

L'enveloppe décrite dans cette demande est d'une longueur relativement faible grâce à la mise en jeu de nombreuses optimisations décrites dans cette demande de brevet.

Néanmoins, l'architecture ainsi proposée peut présenter notamment certains inconvénients, selon l'application à laquelle on la destine. Dans une application automobile, elle est particulièrement adaptée à une implantation verticale dans l'espace sous-capot moteur d'un moteur à combustion dont la sortie du collecteur d'échappement est située en face avant, c'est-à-dire du côté de la face avant du véhicule équipé (si celui-ci présente un espace sous capot moteur dans sa partie avant, ce qui est majoritairement le cas dans les applications automobiles). En outre, cette architecture requiert de réaliser une connexion plus ou moins complexe avec la sortie d'un turbocompresseur, cette connexion pouvant générer des pertes thermiques d'autant plus importantes qu'elle est longue ou présente des surfaces importante, comme par exemple dans le cas d'un coude de liaison. Enfin, bien que particulièrement compacte, l'architecture connue dans l'état de la technique requiert de manière générale un volume d'implantation contraignant dans une direction donnée, celle de la « longueur » de l'enveloppe, et n'est donc pas applicable dans un environnement contraint dans lequel l'ensemble des fonctions de dépollutions ne peuvent être implantées ainsi empilées. Les documents FR 2 947 004 A1, WO 2010/142647 A1 et NL 2 002 986 C divulguent aussi des ensembles de post-traitement des gaz d'échappement.

Dans l'invention, on vise à résoudre ces problèmes par l'adoption d'une architecture optimisée.

Plus précisément, l'invention porte sur ensemble de post-traitement des gaz d'échappement d'un moteur à combustion comportant, selon le sens d'écoulement des gaz d'échappement du moteur :
- un catalyseur d'oxydation ;
- un catalyseur de réduction catalytique sélective des oxydes d'azote ;
- un filtre à particules ;
une première branche rectiligne dudit ensemble comportant le catalyseur d'oxydation, une seconde branche rectiligne comportant le catalyseur de réduction catalytique sélective des oxydes d'azote, le filtre à particules et un coude formant un angle compris entre 60° et 120°, formant un raccord fluidique entre les première et seconde branches, l'ensemble étant disposé dans une enveloppe dite unique.

Selon un mode de réalisation préférentiel, le coude forme un angle de 90° environ, conférant à l'ensemble une géométrie en « L ». Selon d'autres modes de réalisation, les valeurs d'angles comprises entre 90° et 120° peuvent être particulièrement avantageuses pour assurer une implantation aisée de l'invention dans un espace sous-capot moteur d'un véhicule automobile.

De préférence, le filtre à particule est du type mettant en jeu un additif abaissant la température d'oxydation des particules de suie. Un tel filtre dit « additivé » présente l'avantage, grâce à sa plus faible température d'oxydation des suies comparé à un filtre sans additif (dit « catalysé ») de pouvoir être implanté en aval d'un catalyseur SCR sans que son fonctionnement ne soit trop pénalisé par les pertes thermiques liées à sont éloignement de la sortie du moteur. En outre, si le filtre à particules et le catalyseur SCR sont constitué d'un unique monolithe de traitement, le niveau de températures plus faible du filtre lors de ses régénérations permet une dégradation moindre de l'imprégnation SCR sur le filtre.

De préférence, l'ensemble comporte en outre entre le catalyseur d'oxydation et le catalyseur de réduction catalytique sélective des oxydes d'azote :
- une embouchure d'un moyen d'introduction de réducteur ou de précurseur d'un réducteur pour la réduction catalytique sélective des oxydes d'azote ;
- des moyens de mélange aptes à assurer un mélange sensiblement homogène des gaz d'échappement et du réducteur et/ou la conversion du précurseur en réducteur.

Dans une variante de l'invention, le coude forme ou comporte les moyens de mélange. Cela permet d'obtenir un mélange homogène entre les gaz d'échappement et le réducteur SCR dès l'entrée de la seconde branche.

Dans une autre variante de l'invention, les moyens de mélanges comportent un mélangeur dans la seconde branche. Cela permet l'emploi de mélangeurs performants, connus dans l'état de la technique.

De préférence, le catalyseur de réduction catalytique sélective des oxydes d'azote et le filtre à particules sont constitués par un unique monolithe de traitement des gaz d'échappement. C'est une solution compacte et efficace pour permettre un traitement complet des gaz d'échappement, qui permet également d'augmenter le volume de stockage maximum du filtre à particules pour une même allocation de volume aux deux fonctions que sont la réduction des NOx et la réduction des particules.

Dans l'invention l'ensemble comporte en outre un turbocompresseur, dont la sortie est raccordée directement à la première branche. C'est la meilleure configuration pour éviter toute perte thermique entre ces éléments. La première branche associée au turbocompresseur présente, turbocompresseur compris, une longueur d'au plus 600mm, et de préférence de l'ordre de 380mm.

De préférence, la seconde branche présente une longueur d'au plus 600mm, et de préférence de l'ordre de 380mm. La seconde branche peut comporter un convergent de sortie, de préférence plat et/ou présentant une sortie latérale, ce qui en diminue l'encombrement selon l'axe de la seconde branche.

Un ensemble conforme à l'invention peut également présenter une ou plusieurs des caractéristiques suivantes :
- le catalyseur d'oxydation présente une densité de cellule comprise entre 62 et 140 cellules par centimètre carré, et de préférence de l'ordre de 93 cellules par centimètres carré ;
- le catalyseur d'oxydation présente une épaisseur de paroi comprise entre 50 µm et 165 µm ;
- le catalyseur de réduction catalytique sélective des oxydes d'azote présente une densité de cellule comprise entre 62 et 140 cellules par centimètre carré, et de préférence de l'ordre de 93 cellules par centimètres carré ;
- le catalyseur de réduction catalytique sélective des oxydes d'azote présente une épaisseur de paroi comprise entre 50 µm et 165 µm ;

L'invention porte également sur un groupe motopropulseur comportant un moteur à combustion à plusieurs cylindres, dont les cylindres sont disposés en ligne, et un ensemble conforme à l'invention, dans lequel la première branche est disposée parallèlement à l'alignement formé par les cylindres.

L'invention porte enfin sur un véhicule automobile comportant un groupe motopropulseur selon l'invention. Selon un mode de réalisation, le moteur présente une disposition transversale, par rapport au véhicule, dans l'espace sous-capot. Selon un autre mode de réalisation, le moteur présente une disposition longitudinale, par rapport au véhicule, dans l'espace sous-capot.

L'invention est décrite plus en détail ci-après et en référence aux figures représentant schématiquement le système dans son mode de réalisation préférentiel.
La figure 1 présente schématiquement un mode de réalisation d'un ensemble selon l'invention selon un premier angle de vue.
La figure 2 présente schématiquement un autre mode de réalisation d'un ensemble selon l'invention selon le premier angle de vue.
La figure 3 présente schématiquement un autre mode de réalisation d'un ensemble selon l'invention selon le premier angle de vue.
La figure 4 présente selon un second angle de vue un groupe motopropulseur conforme à l'invention, mettant en jeu un ensemble selon l'invention selon une première variante.
La figure 5 présente selon le second angle de vue un groupe motopropulseur conforme à l'invention, mettant en jeu un ensemble selon l'invention selon une seconde variante.
La figure 6 présente selon le second angle de vue un groupe motopropulseur conforme à l'invention, mettant en jeu un ensemble selon l'invention selon une troisième variante.
La figure 7 présente selon le second angle de vue un groupe motopropulseur conforme à l'invention, mettant en jeu un ensemble selon l'invention selon une quatrième variante.

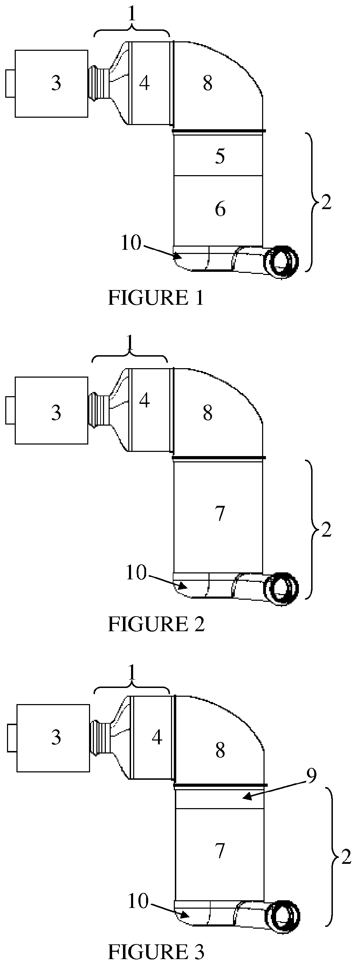

La figure 1 présente un ensemble selon un mode de réalisation préférentiel de l'invention, selon une vue extérieure schématique en 3 dimensions, selon un premier angle de vue.

Un ensemble selon l'invention comporte une première branche 1 rectiligne et une seconde branche rectiligne 2. Dans l'invention, la première et la seconde branche sont reliées par un coude 8 formant un angle géométrique compris entre 60° et 120°. Dans la variante de l'invention ici représentée, l'angle est sensiblement de 90°, conférant à l'ensemble une forme en « L ».

La première branche comporte un catalyseur d'oxydation 4. Le catalyseur d'oxydation sert principalement au traitement des hydrocarbures imbrûlés (HC) et du monoxyde de carbone (CO) dans le cadre d'un moteur Diesel.

La seconde branche comporte un catalyseur de réduction catalytique sélective des oxydes d'azote, ou catalyseur SCR 5. La seconde branche comporte également un filtre à particule 6. Le catalyseur SCR 5 et le filtre à particules 6 peuvent, selon la variante de l'invention considérée, être regroupés en un unique monolithe dit « FAP/SCR » 7, à savoir un filtre à particules portant une imprégnation de réduction catalytique sélective des oxydes d'azote. La figure 2 présente d'ailleurs un mode de réalisation ayant pour seule différence par rapport à celui présenté en figure 1 qu'il comporte un monolithe unique FAP/SCR 7.

Le filtre à particule 6, ou le FAP/SCR 7, est préférentiellement d'un type mettant en jeu un additif permettant d'abaisser la température d'oxydation des suies. Cette caractéristique permet au filtre de se régénérer à des températures plus basses qu'un filtre dit « catalysé » (désignant un filtre n'employant pas d'additif d'abaissement de la température d'oxydation des suies).

La première branche 1 est reliée à la seconde branche par un coude 8 formant un raccord fluidique permettant le transport des gaz d'échappement de la sortie de la première branche vers l'entrée de la seconde branche (les notions d'entrée et de sortie se comprenant dans l'ensemble du présent document selon le sens d'écoulement des gaz d'échappement dans l'ensemble selon l'invention).

Ce coude 8 peut également avoir un rôle important dans le traitement des gaz d'échappement. En effet, la catalyse SCR nécessite l'introduction et le mélange dans les gaz d'échappement d'un réducteur (agent réducteur ou précurseur d'un tel agent) par des moyens appropriés tel qu'un injecteur dédié (non représentés sur les figures). L'embouchure d'un moyen d'introduction peut avantageusement être située dans le raccord fluidique 8, de préférence vers l'entrée du dit coude afin de maximiser la distance entre le point d'introduction de réducteur et le catalyseur SCR 5, une telle distance favorisant le mélange du réducteur dans les gaz d'échappement.

La forme du raccord 8 peut également être optimisée de sorte à favoriser (voire totalement réaliser) le mélange homogène du réducteur et des gaz d'échappement. Le raccord peut notamment comporter un bossage interne dont la forme est optimisée pour générer des turbulences assurant le mélange entre les gaz d'échappement et le réducteur.

Une configuration coudée et notamment en L telle que proposée dans l'invention est d'ailleurs favorable à ce phénomène, du fait du changement de direction imposé au flux des gaz d'échappement par le coude 8.

Tel que représenté en figure 1, la première branche comporte également un turbocompresseur 3 relié directement à l'enveloppe de l'ensemble, c'est-à-dire raccordé à la première branche 1. Plus précisément, l'enveloppe est directement reliée à la sortie de la turbine du turbocompresseur 3, c'est à dire qu'un divergent formant l'entrée de l'enveloppe de l'ensemble est relié à la sortie de la turbine du turbocompresseur 3. Le turbocompresseur 3 est préférentiellement orienté de sorte que la sortie de sa turbine soit dans l'axe de la première branche 1. Ainsi constituée, la première branche 1 associée au turbocompresseur 3 compris, présente une longueur de l'ordre de 380mm. Cette longueur n'excède pas 600mm ce qui la rend compatible d'une implantation aisée dans un espace sous-capot de véhicule automobile, notamment dans la largeur (pour une implantation transversale) ou dans la longueur (pour une implantation longitudinale) de l'espace sous-capot.

La seconde branche présente préférentiellement une longueur de l'ordre de 380mm. Préférentiellement, cette longueur n'excède pas 600mm ce qui la rend compatible d'une implantation aisée dans un espace sous-capot de véhicule automobile, notamment dans la hauteur de l'espace sous-capot.

La notion de « L » ne préjuge pas de l'orientation de l'ensemble en utilisation. Ainsi, dans une application automobile, la première branche pourra (et sera généralement) positionnée sensiblement horizontalement en partie haute dans un espace sous-capot moteur.

Dans la variante préférentielle de l'invention ici présentée, et ce à toutes les figures, le coude 8 est le plus court possible, formant ainsi une portion de tore de faible rayon intérieur, au plus proche d'un rayon nul (portion d'un tore dit à collier nul). Il présente en entrée la même section que l'enveloppe au niveau de la sortie du catalyseur d'oxydation 4, et en sortie la même section que l'enveloppe au niveau de l'entrée de la seconde branche 2. L'enveloppe unique de l'ensemble peut présenter une section évolutive, et par exemple passer d'une section circulaire, à une section elliptique ou ovalisé, ou vice-versa.

Un ensemble selon l'invention peut comporter un mélangeur 9 rapporté, c'est-à-dire un dispositif apte à générer des turbulences et/ou à augmenter la distance parcourue par les gaz d'échappement de sorte à favoriser leur mélange homogène avec le réducteur, ou augmenter leur temps de transport avant l'atteinte du catalyseur SCR, afin par exemple de permettre la transformation en agent réducteur d'un précurseur d'un tel agent. La figure 3 présente ainsi une variante de l'invention présentant un mélangeur rapporté dans la seconde branche 2, suivi d'un monolithe FAP/SCR 7.

Le mélangeur 9 sera préférentiellement disposé dans la seconde branche 2 en amont du catalyseur SCR 5 ou du monolithe FAP/SCR 7. On peut dans ce cadre employer préférentiellement un mélangeur du type connu au travers du document FR2947003. Cependant, et selon l'application précise considérée, dans la mesure où le mélange peut être largement engagé dans le raccord par sa seule géométrie ou grâce à d'autres artifices, un mélangeur 9 plus simple et moins coûteux peut être employé, par exemple un mélangeur 9 mettant en jeu une ou plusieurs grilles de mélange, ou des ailettes disposées en quinconce.

La seconde branche 2 inclut également dans la variante de l'invention ici représentée un convergent de sortie 10 afin de canaliser les gaz d'échappement traité par l'ensemble selon l'invention. Ce convergent présente préférentiellement une évacuation latérale. Cela permet d'en limiter la longueur et d'orienter le flux des gaz d'échappement de manière adéquate.

La première branche 1 et la seconde branche 2 présentent des longueurs sensiblement égales. Ceci est rendu possible par la répartition des fonctions proposée dans l'invention à savoir, la suralimentation et la catalyse des HC et CO dans la première branche 1, le traitement des NOx et des particules dans la seconde branche 2. De cette répartition découle un avantage majeur en termes de facilité d'implantation d'un ensemble selon l'invention.

Pour une application automobile classique présentant un moteur de type Diesel, on pourra notamment employer :
- un turbocompresseur du type à géométrie fixe ou variable ;
- un catalyseur d'oxydation d'un diamètre compris entre 114mm (4,5 pouces) et 178mm (7pouces) et préférentiellement de l'ordre de 144 mm (5,66 pouces) et d'une longueur de 76mm à 127mm (3 à 5 pouces), et de préférence de l'ordre de 102mm (4 pouces) ;
- un monolithe FAP/SCR d'un diamètre compris entre 114mm (4,5 pouces) et 178mm (7pouces) et préférentiellement de l'ordre de 144 mm (5,66 pouces) et d'une longueur de 127mm à 203mm (5 à 8 pouces), et de préférence de l'ordre de 152mm (6 pouces) ;

Il est possible d'employer des monolithes de traitement qui ne sont pas cylindriques ronds.

Il est possible d'employer des monolithes cylindriques ronds en combinaison avec des monolithes non cylindriques ronds. On peut par exemple employer un catalyseur d'oxydation ovalisé et des fonctions de traitement des NOx et des particules par un ou plusieurs monolithes cylindriques ronds.

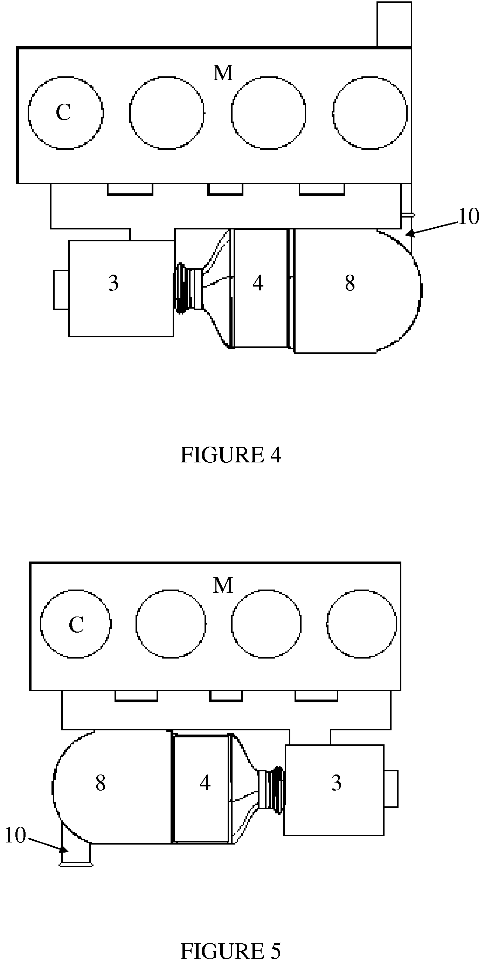

On a représenté aux figures 4 à 7 des groupes motopropulseurs conformes à l'invention, mettant en jeu des ensembles conformes à l'invention.

La figure 4 présente schématiquement un groupe motopropulseur comportant un moteur M à combustion à quatre cylindres C en ligne. L'invention est également applicable à des moteurs d'autres types, notamment des moteurs comportant de 2 à 6 cylindres. L'ensemble est vu selon un point de vue dans l'axe des cylindres du moteur, qui correspond généralement à une vue « de haut » selon l'implantation classique d'un tel moteur dans un espace sous-capot d'un véhicule automobile.

La première branche 1 est implantée sensiblement parallèlement à l'alignement des cylindres, le long d'un collecteur d'échappement E. La première branche peut par exemple être disposée à côté du collecteur ou sous le collecteur.

Dans cette variante de l'invention, la sortie du convergent 10 est orientée vers la face opposée du moteur, de sorte que la conduite d'échappement passe sous le moteur. Cette variante est particulièrement destinée à une application dans laquelle le groupe motopropulseur est implanté transversalement (orthogonalement à l'axe du véhicule) dans l'espace sous-capot d'un véhicule automobile, avec l'ensemble de dépollution selon l'invention positionné entre la face avant du véhicule et le moteur.

La figure 5 présente schématiquement selon le même point de vue un groupe motopropulseur particulièrement destiné à être implanté transversalement dans l'espace sous-capot d'un véhicule automobile, avec l'ensemble de dépollution selon l'invention positionné entre le moteur et le tablier séparant l'espace sous capot de l'habitacle du véhicule.

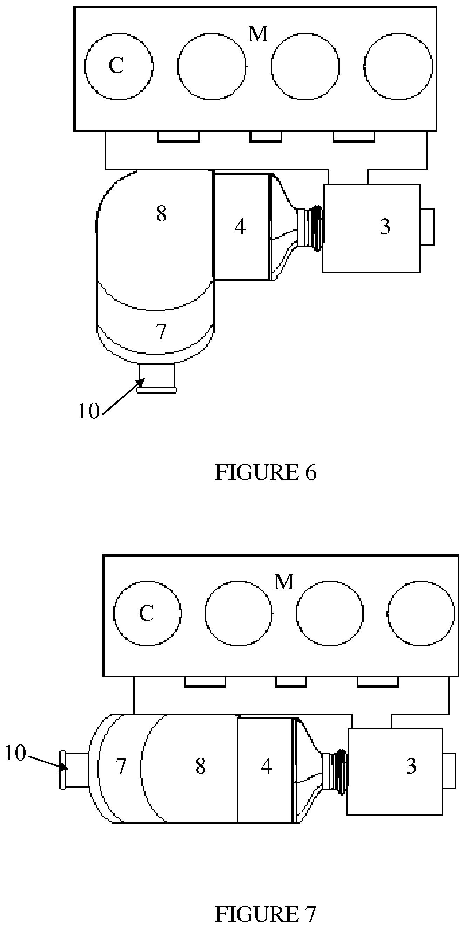

La figure 6 présente schématiquement selon le même point de vue un groupe motopropulseur comportant un ensemble selon l'invention, la seconde branche 2 présentant une inclinaison vis-à-vis de l'axe des cylindres du moteur. Cela permet une implantation partielle de l'ensemble, toujours dans l'espace sous capot moteur, dans l'amorce d'un tunnel (tunnel permettant le cheminement sous plancher de la ligne d'échappement du véhicule. Cette disposition oblique de la seconde branche réduit en outre l'encombrement vertical (selon l'axe des cylindres du moteur) de l'ensemble, permettant ainsi l'implantation sous l'ensemble de dépollution d'éléments comme un berceau-moteur ou une crémaillère de direction.

La figure 7 présente schématiquement selon le même point de vue un groupe motopropulseur comportant un ensemble selon l'invention, la sortie du convergeant 10 étant dirigée selon l'alignement des cylindres. Cette variante est particulièrement destinée à une application dans laquelle le groupe motopropulseur est implanté longitudinalement (dans l'axe du véhicule). Dans la variante ici représentée, le coude présente en outre un angle légèrement supérieur à 90°, ce qui réduit l'encombrement vertical de l'ensemble.

L'invention ainsi développée, en permettant une répartition suivant deux axes des éléments de dépollution, favorise l'implantation d'un ensemble complet de traitement des gaz d'échappement d'un moteur à combustion dans un environnement contraint où l'ensemble ne peut être implanté suivant un seul axe.

Dans l'invention la première branche comporte un turbocompresseur, positionner le catalyseur d'oxydation au plus près de la sortie du turbocompresseur permet de limiter les déperditions thermiques et de limiter les inerties thermiques s'opposant au chauffage rapide du catalyseur d'oxydation par les gaz d'échappement (une inertie thermique importante est pénalisant pour l'amorçage du catalyseur, notamment dans le cadre des cycles normalisés d'homologation). Positionner le catalyseur d'oxydation directement en sortie dans l'alignement de la sortie du turbocompresseur est la meilleure architecture pour permettre un amorçage rapide du catalyseur d'oxydation, et permet donc d'en limiter la dimension. En outre les pertes de charge entre la turbine et le catalyseur sont limitées. De même, un positionnement au plus près de la sortie de la turbine du catalyseur SCR favorise sa montée rapide en température, et donc son amorçage. Un coude de faible longueur et présentant une faible inertie thermique permet d'optimiser cette montée en température.

Une architecture selon l'invention permet donc un cercle vertueux quant au dimensionnement des monolithes de traitement des gaz d'échappement, ce qui en facilite d'autant plus l'implantation dans un environnement contraint et en réduit le coût.

Une architecture selon l'invention, avec une première et une seconde branche et un coude entre ces branches favorise en outre le mélange d'un réducteur SCR introduit en amont de la seconde branche, par exemple dans le coude. On peut optimiser la forme du coude pour favoriser au maximum le mélange du réducteur dans les gaz d'échappement.

Enfin, l'implantation d'un ensemble selon l'invention dans un espace sous-capot moteur d'un véhicule automobile offre un potentiel de gain de masse important par rapport aux architectures connues, notamment en permettant la suppression de tout dispositif de post-traitement sous caisse ainsi que tout dispositif de calfeutrage (écrans thermiques, etc.) généralement disposés sous le plancher du véhicule pour minimiser les pertes thermiques avant l'entrée dans les moyens de traitement des gaz implanté sous le plancher.

## Revendications

1. Ensemble de post-traitement des gaz d'échappement d'un moteur à combustion comportant, selon le sens d'écoulement des gaz d'échappement du moteur :
• un catalyseur d'oxydation (4);
• un catalyseur de réduction catalytique sélective des oxydes d'azote (5); et
• un filtre à particules (6);
une première branche (1) rectiligne dudit ensemble comportant le catalyseur d'oxydation (4), une seconde branche (2) rectiligne comportant le catalyseur de réduction catalytique sélective des oxydes d'azote (5), le filtre à particules (6) et un coude (8) formant un angle compris entre 60° et 120° qui forme un raccord fluidique entre les première et seconde branches (1,2), l'ensemble étant disposé dans une enveloppe dite unique constituée par un assemblage bord à bord de l'enveloppe du catalyseur d'oxydation (4), de l'enveloppe du catalyseur de réduction catalytique sélective des oxydes d'azote (5), du coude (8) et de l'enveloppe du filtre à particules (6), ledit ensemble comportant en outre un turbocompresseur (3), **caractérisé en ce que** ladite première branche (1) est associée directement à la sortie du turbocompresseur (3) présentant, turbocompresseur (3) compris, une longueur d'au plus 600mm, et de préférence de l'ordre de 380mm.

2. Ensemble selon la revendication 1, dans lequel le coude (8) forme un angle de 90° environ, conférant à l'ensemble une géométrie en « L ».

3. Ensemble selon la revendication 1 ou la revendication 2, dans lequel le filtre à particules (6) est du type mettant en jeu un additif abaissant la température d'oxydation des particules de suie.

4. Ensemble selon l'une des revendications 1 à 3, comportant en outre entre le catalyseur d'oxydation (4) et le catalyseur de réduction catalytique sélective des oxydes d'azote (5) :
• une embouchure d'un moyen d'introduction de réducteur ou de précurseur d'un réducteur pour la réduction catalytique sélective des oxydes d'azote ;
• des moyens de mélange aptes à assurer un mélange sensiblement homogène des gaz d'échappement et du réducteur et/ou la conversion du précurseur en réducteur.

5. Ensemble selon la revendication 4, dans lequel le coude (8) forme ou comporte les moyens de mélange.

6. Ensemble selon la revendication 4, dans lequel les moyens de mélanges comportent un mélangeur (9) dans la seconde branche.

7. Ensemble l'une quelconque des revendications précédentes, dans lequel le catalyseur de réduction catalytique sélective des oxydes d'azote (5) et le filtre à particules (6) sont constitués par un unique monolithe (7) de traitement des gaz d'échappement.

8. Ensemble selon l'une des revendications précédentes, dans lequel la seconde branche (2) présente une longueur d'au plus 600mm, et de préférence de l'ordre de 380mm.

9. Ensemble selon l'une quelconque des revendications précédentes, présentant au moins une des caractéristiques suivantes :
- le catalyseur d'oxydation (4) présente une densité de cellule comprise entre 62 et 140 cellules par centimètre carré, et de préférence de l'ordre de 93 cellules par centimètres carré ;
- le catalyseur d'oxydation (4) présente une épaisseur de paroi comprise entre 50 µm et 165 µm ;
- le catalyseur de réduction catalytique sélective des oxydes d'azote (6) présente une densité de cellule comprise entre 62 et 140 cellules par centimètre carré, et de préférence de l'ordre de 93 cellules par centimètres carré ;
- le catalyseur de réduction catalytique sélective des oxydes d'azote (6) présente une épaisseur de paroi comprise entre 50 µm et 165 µm ;

10. Groupe motopropulseur comportant un moteur (M) à combustion à plusieurs cylindres (C), dont les cylindres (C) sont disposés en ligne, et un ensemble selon l'une quelconque des revendications précédentes, dans lequel la première branche (1) est disposée parallèlement à l'alignement formé par les cylindres (C).

11. Véhicule automobile comportant un groupe motopropulseur selon la revendication 10, disposé dans un espace sous-capot.

12. Véhicule selon la revendication 11, dans lequel le moteur présente une disposition transversale, par rapport au véhicule, dans l'espace sous-capot.

13. Véhicule selon la revendication 11 dans lequel le moteur présente une disposition longitudinale, par rapport au véhicule, dans l'espace sous-capot.

## Patentansprüche

1. Einheit zur Nachbehandlung der Abgase einer Brennkraftmaschine, die in die Fließrichtung der Abgase der Maschine Folgendes umfasst:
• einen Oxidationskatalysator (4);
• einen Katalysator zur selektiven katalytischen Reduktion der Stickstoffgase (5); und
• ein Partikelfilter (6);
wobei ein erster geradliniger Zweig (1) der Einheit den Oxidationskatalysator (4) umfasst, ein zweiter geradliniger Zweig (2) den Katalysator zur selektiven katalytischen Reduktion der Stickstoffgase (5) umfasst, das Partikelfilter (6) und ein Krümmer (8) einen Winkel zwischen 60° und 120° bilden, der einen Fluidanschluss zwischen dem ersten und dem zweiten Zweig (1, 2) bildet, wobei die Einheit in einem einzig genannten Mantel angeordnet ist, der aus einer Randan-Rand-Anordnung des Mantels des Oxidationskatalysators (4), des Mantel des Katalysators zur selektiven katalytischen Reduktion der Stickstoffoxide (5), des Krümmers (8) und des Mantels des Partikelfilters (6) besteht, wobei die Einheit außerdem einen Turboverdichter (3) umfasst, **dadurch gekennzeichnet, dass** der erste Zweig (1) direkt mit dem Ausgang des Turboverdichters (3) assoziiert ist, der, einschließlich des Turboverdichters (3), eine Länge von maximal 600 mm und vorzugsweise in der Größenordnung von 380 mm aufweist.

2. Einheit nach Anspruch 1, wobei der Krümmer (8) einen Winkel zu etwa 90° bildet, was der Einheit eine "L-"-Geometrie verleiht.

3. Einheit nach Anspruch 1 oder Anspruch 2, wobei das Partikelfilter (6) von dem Typ ist, der einen Zusatzstoff einsetzt, der die Oxidationstemperatur der Rußpartikel senkt.

4. Einheit nach einem der Ansprüche 1 bis 3, die außerdem zwischen dem Oxidationskatalysator (4) und dem Katalysator zur selektiven katalytischen Reduktion der Stickstoffoxide (5) Folgendes umfasst:
• eine Mündung eines Mittels zum Einführen von Reduktionsmittel oder Vorläufer eines Reduktionsmittels für die selektive katalytische Reduktion der Stickstoffoxide;
• Mittel zum Mischen, die geeignet sind, ein im Wesentlichen homogenes Gemisch der Abgase und des Reduktionsmittels und/oder die Umwandlung des Vorläufers in Reduktionsmittel sicherzustellen.

5. Einheit nach Anspruch 4, wobei der Krümmer (8) die Mischmittel bildet oder umfasst.

6. Einheit nach Anspruch 4, wobei die Mischmittel einen Mischer (9) in dem zweiten Zweig umfassen.

7. Einheit nach einem der vorstehenden Ansprüche, wobei der Katalysator zur selektiven katalytischen Reduktion der Stickstoffoxide (5) und das Partikelfilter (6) aus einem einzigen Monolith (7) zur Behandlung der Abgase bestehen.

8. Einheit nach einem der vorstehenden Ansprüche, wobei der zweite Zweig (2) eine Länge von Achse maximal 600 mm und vorzugsweise in der Größenordnung von 380 mm aufweist.

9. Einheit nach einem der vorstehenden Ansprüche, die mindestens eines der folgenden Merkmale aufweist:
- der Oxidationskatalysator (4) weist eine Zelldichte zwischen 62 und 140 Zellen pro Quadratzentimeter und vorzugsweise in der Größenordnung von 93 Zellen pro Quadratzentimeter auf;
- der Oxidationskatalysator (4) weist eine Wandstärke zwischen 50 µm und 165 µm auf;
- der Katalysator zur selektiven katalytischen Reduktion der Stickstoffoxide (6) weist eine Zelldichte zwischen 62 und 140 Zellen pro Quadratzentimeter und vorzugsweise 93 Zellen pro Quadratzentimeter auf;
- der Katalysator zur selektiven katalytischen Reduktion der Stickstoffoxide (6) weist eine Wandstärke zwischen 50 µm und 165 µm auf.

10. Antriebsstrang, der eine Brennkraftmaschine (M) mit mehreren Zylindern (C) umfasst, deren Zylinder (C) in Reihe angeordnet sind, und eine Einheit nach einem der vorstehenden Ansprüche, wobei der erste Zweig (1) parallel zu der Ausrichtung, die von den Zylindern (C) gebildet wird, angeordnet ist.

11. Kraftfahrzeug, das einen Antriebsstrang nach Anspruch 10, der in einem Raum unter der Motorhaube angeordnet ist, umfasst.

12. Fahrzeug nach Anspruch 11, wobei die Maschine eine Queranordnung in Bezug auf das Fahrzeug in dem Raum unter der Motorhaube aufweist.

13. Fahrzeug nach Anspruch 11, wobei die Maschine eine Längsanordnung in Bezug auf das Fahrzeug in dem Raum unter der Motorhaube aufweist.

## Claims

1. A unit for exhaust gas post-treatment of a combustion engine comprising, along the flow direction of the exhaust gas of the engine:
• an oxidation catalyst (4);
• a catalyst for the selective catalytic reduction of nitrogen oxides (5); and
• a particle filter (6);
a first rectilinear branch (1) of said unit comprising the oxidation catalyst (4), a second rectilinear branch (2) comprising the catalyst for the selective catalytic reduction of nitrogen oxides (5), the particle filter (6) and an elbow (8) forming an angle comprised between 60° and 120° which forms a fluidic connection between the first and second branches (1, 2), the unit being disposed in a housing designated as a single housing, constituted by an edge to edge assembly of the housing of the oxidation catalyst (4), of the housing of the catalyst for selective catalytic reduction of nitrogen oxides (5), of the elbow (8) and of the housing of the particle filter (6), said unit further comprising a turbocharger (3),
**characterized in that** said first branch (1) is directly associated to the outlet of the turbocharger (3) having, including turbocharger (3), a length of at most 600mm, and preferably in the order of 380mm.

2. The unit according to Claim 1, in which the elbow (8) forms an angle of approximately 90°, giving the unit an "L"-shaped geometry.

3. The unit according to Claim 1 or Claim 2, in which the particle filter (6) is of the type bringing into play an additive lowering the oxidation temperature of the soot particles.

4. The unit according to one of Claims 1 to 3, further comprising between the oxidation catalyst (4) and the catalyst for the selective catalytic reduction of nitrogen oxides (5):
• an opening of a means for introduction of reducing agent or of precursor of a reducing agent for the selective catalytic reduction of nitrogen oxides;
• mixing means able to ensure a substantially homogeneous mixing of the exhaust gas and of the reducing agent and/or the conversion of the precursor into reducing agent.

5. The unit according to Claim 4, in which the elbow (8) forms or comprises the mixing means.

6. The unit according to Claim 4, in which the mixing means comprise a mixer (9) in the second branch.

7. The unit according to any one of the preceding claims, in which the catalyst for the selective catalytic reduction of nitrogen oxides (5) and the particle filter (6) are constituted by a single monolith (7) for processing of the exhaust gas.

8. The unit according to one of the preceding claims, in which the second branch (2) has a length of at most 600mm, and preferably in the order of 380mm.

9. The unit according to any one of the preceding claims, having at least one of the following characteristics:
- the oxidation catalyst (4) has a cell density comprised between 62 and 140 cells per square centimetre, and preferably in the order of 93 cells per square centimetre;
- the oxidation catalyst (4) has a wall thickness comprised between 50 mm and 165 mm;
- the catalyst for selective catalytic reduction of nitrogen oxides (6) has a cell density comprised between 62 and 140 cells per square centimetre, and preferably in the order of 93 cells per square centimetre;
- the catalyst for selective catalytic reduction of nitrogen oxides (6) has a wall thickness comprised between 50 mm and 165 mm.

10. A power train comprising a combustion engine (M) having several cylinders (C), the cylinders (C) of which are disposed in a line, and a unit according to any one of the preceding claims, in which the first branch (1) is disposed parallel to the alignment formed by the cylinders (C).

11. A motor vehicle comprising a power train according to Claim 10, disposed in an under-bonnet space.

12. The vehicle according to Claim 11, in which the engine has a transverse arrangement, with respect to the vehicle, in the under-bonnet space.

13. The vehicle according to Claim 11,
in which the engine has a longitudinal arrangement, with respect to the vehicle, in the under-bonnet space.
